# FASCICULE DE BREVET EUROPEEN

(11) **EP 1 054 748 B1**
(45) Date de publication et mention de la délivrance du brevet: **05.06.2002**
(21) Numéro de dépôt: 99900241.3
(22) Date de dépôt: 25.01.1999
(51) Int. Cl.: B23D 57/00, B28D 5/04

(54) **DISPOSITIF DE SCIAGE PAR FIL POUR LA DECOUPE DE TRANCHES FINES UTILISANT LE CROISEMENT ANGULAIRE D'AU MOINS DEUX NAPPES DE FILS DE SCIAGE**
DRAHTSÄGE ZUM SCHNEIDEN VON DÜNNEN SCHEIBEN MITTELS WENIGSTENS ZWEI EINANDER SCHNEIDENDEN SÄGEDRAHTGEWEBEN
WIRE SAWING DEVICE FOR CUTTING FINE SLICES USING ANGULAR CROSSING OF AT LEAST TWO SAWING YARN LAYERS

(30) Priorité: 13.02.1998 CH 36498
(43) Date de publication de la demande: 29.11.2000
(73) Titulaire: HCT Shaping Systems SA, 1033 Cheseaux (CH)
(72) Inventeur: HAUSER, Charles, CH-1272 Genolier (CH)
(74) Mandataire: Micheli & Cie
(86) Numéro de dépôt international: IB9900097
(87) Numéro de publication internationale: WO9941034

(56) Documents cités:
- WO-A-91/12915
- WO-A-97/32681
- WO-A-98/50209
- PATENT ABSTRACTS OF JAPAN vol. 012, no. 126 (M-687), 19 avril 1988 & JP 62 251062 A (TOSHIBA CORP), 31 octobre 1987
- PATENT ABSTRACTS OF JAPAN vol. 004, no. 114 (M-026), 15 août 1980 & JP 55 070545 A (MATSUSHITA ELECTRIC IND CO LTD), 28 mai 1980

## Description

La présente invention concerne un dispositif de sciage par fil comprenant des cylindres guide-fils supportant un fil maintenu en position grâce à des gorges prévues sur la surface desdits cylindres guide-fils qui définissent l'intervalle entre les fils d'une nappe de fils, le fil étant susceptible de se déplacer selon un mouvement alternatif ou continu en appui contre au moins une pièce à scier fixée sur au moins une table support. Un tel dispositif est connu du document WO 97/326B1.

On connaît de tels dispositifs pour la découpe en tranches fines d'une pièce à scier, dans lesquels le fil tendu est à la fois guidé et tracté par les cylindres guide-fils. Ces cylindres guide-fils généralement revêtus d'une couche synthétique sont gravés avec des gorges dont la géométrie et les dimensions doivent être d'une grande précision. Le fil est enroulé en spirale autour des cylindres guide-fils et forme entre deux cylindres guide-fils au moins une nappe de fils parallèles dont la distance entre deux fils consécutifs fixe l'épaisseur des tranches. En raison de l'enroulement en spirale, tous les fils de la nappe de fils se déplacent parallèlement générant un effort perpendiculaire à l'avance de la table support et induisant des efforts de cisaillement et de torsion sur le mécanisme de tenue de la pièce à scier. Ces efforts sont fonction de la vitesse de sciage et des dimensions de la pièce à scier et peuvent aller jusqu'à l'arrachage de la pièce à scier de son support. Les tensions produites à la base de la pièce à scier induisent des déformations qui après sciage se retrouvent sous forme d'un voilage des tranches obtenues. De plus, le plan de la nappe de fils est dans les dispositifs connus généralement perpendiculaire à la direction de sciage, ce qui peut induire des ondulations sur la surface des tranches en cas de mouvement général de la nappe de fils résultant d'oscillations thermiques par exemple. Ces ondulations, même de quelques micromètres, suffisent à rendre les tranches inutilisables pour certaines applications telles que du silicium pour l'industrie des semi-conducteurs.

Le but de l'invention consiste à remédier aux inconvénients précités en permettant au dispositif de sciage par fil l'obtention de tranches de meilleure qualité géométrique en diminuant les ondulations et le voilage de celles-ci tout en améliorant la productivité de l'ensemble. Le dispositif selon l'invention est caractérisé à cet effet, par le fait qu'il comprend au moins quatre cylindres guide-fils arrangés en séquence les uns à la suite des autres avec deux cylindres guide-fils extérieurs et au moins deux cylindres guide-fils intérieurs, le fil étant agencé sur les cylindres guide-fils extérieurs suivant un premier intervalle et sur les cylindres guide-fils intérieurs suivant un second intervalle correspondant à la moitié du premier intervalle, le fil provenant d'une première gorge sur un cylindre guide-fils intérieur passant dans une gorge du cylindre guide-fils extérieur pour être renvoyé dans une seconde gorge sur le cylindre guide-fil intérieur distante du second intervalle de la première gorge, le fil coopérant avec les cylindres guide-fils intérieurs voisins en passant de la partie supérieure, respectivement inférieure, de l'un des cylindres guide-fils intérieurs en ligne directe à la partie inférieure, respectivement supérieure du cylindre guide-fils intérieur voisin de façon à constituer une structure en X formée de deux nappes de fils se croisant avec un angle de croisement au moins égal à 20° et donné par le diamètre des cylindres guide-fils intérieurs et par l'espacement séparant les axes de deux cylindres guide-fils intérieurs voisins.

On obtient ainsi deux nappes de fils faisant un angle suffisant avec la direction de découpe et dont les fils sont en projection sur un plan de travail défini par les axes des cylindres guide-fils intérieurs rigoureusement parallèles, de façon que les faces des tranches sciées soient également parallèles. Le croisement des nappes avec un angle d'au moins 20° améliorera le problème des ondulations puisque celles-ci ne seront plus parallèles mais seront angulairement différentes de part et d'autre des tranches obtenues, ce qui peut réduire, simplifier, voire supprimer, les opérations subséquentes de lappage ou de rectification. L'utilisation d'au moins deux guide-fils intérieurs permet de réaliser d'une manière simple, par un enroulement du fil croisé en forme de X, les deux directions de sciage avec un angle suffisant pour créer l'effet requis de façon à diminuer le problème d'ondulations éventuelles. Il est particulièrement important de relever que dans cette configuration, les efforts de cisaillement induits sur le support par les deux nappes ayant des directions angulaires très différentes de la direction de sciage, donc de l'avance de la table support, sont considérablement réduits. De plus, la position angulaire des nappes de fils par rapport au déplacement de la table support, donc de la pièce à scier, diminue la pression de coupe sur la surface de la pièce à scier et permet ainsi une plus grande vitesse de découpe, augmentant du même coup la productivité du dispositif de sciage par fil.

Du fait des nappes croisées en forme de X passant sur la partie supérieure et inférieure des cylindres guide-fils intérieurs, la répartition des efforts des fils sur les cylindres guide-fils intérieurs est bien équilibrée. Les efforts sur les paliers des cylindres guide-fils intérieurs sont donc faibles. La chaleur dégagée par ces paliers sera ainsi diminuée ce qui permettra une amélioration de la géométrie des tranches sciées. En outre, on pourra utiliser des roulements de plus petite taille.

La précision des tranches sciées est également améliorée du fait que les cylindres guide-fils intérieurs subissent peu d'efforts déterminant la position des fils des nappes de fils croisées, tandis que les cylindres guides-fils extérieurs soumis à des efforts directionnels importants n'influencent pas la position des fils, mais servent à l'entraînement.

L'angle nécessaire entre les deux nappes doit être d'au moins 20° si l'on veut obtenir un effet de croisement sensible. Toutefois, au delà de 90° l'intérêt de nappes croisées va en décroissant.

Du fait que les nappes de fils croisées sont tendues en ligne directe entre des cylindres guide-fils intérieurs voisins pour former une structure en X, donc sans passer par un organe de guidage tel qu'un cylindre de guidage ou de déviation, on obtient un angle de croisement élevé des nappes et un très bon alignement et un parallélisme optimal des fils d'une nappe.

Etant donné que les fils sont agencés sur les cylindres guide-fils intérieurs avec un intervalle correspondant à la moitié de celui des cylindres guide-fils extérieurs qui renvoient le fil reçu d'une gorge du cylindre guide-fils intérieur vers une gorge distante d'un demi-intervalle sur ce cylindre intérieur, les fils sont arrangés sur les cylindres guide-fils intérieurs, tel que leurs projections sur plan de travail sont parfaitement parallèles. Des tranches de faces parallèles sont ainsi obtenues de manière simple avec des nappes croisées à angle de croisement important, supérieur ou égal à 20°.

L'invention permet donc de réaliser un dispositif de sciage par fil performant ayant une productivité élevée, une précision moyenne accrue par la diminution des défauts géométriques et la diminution des tensions internes en cours de sciage dans la pièce à scier qui est souvent d'un matériau très sensible aux efforts extérieurs.

Selon un mode d'exécution avantageux, le dispositif comprend n cylindres guide-fils intérieurs arrangés en séquence les uns à la suite des autres, n étant un nombre entier égal ou supérieur à 2, le fil coopérant avec les cylindres guide-fils intérieurs de façon à obtenir (n-1) croisements de nappes de fils, (n-1) pièces à scier étant susceptibles d'être appliquées contre les nappes de fils croisés sensiblement au voisinage de leur croisement.

Favorablement, n est compris entre 3 et 6.

Par ces caractéristiques, on obtient un nombre considérable d'avantages simultanés. Au lieu d'avoir un rapport nombre de cylindres guide-fils intérieurs sur nombre de pièces à scier égal à 2, ce rapport peut être réduit considérablement, à savoir à 1.5, 1.33, 1.25, resp. 1.2 pour 3,4,5, resp. 6 cylindres guide-fils intérieurs. On obtient donc un rapport usure du revêtement des cylindres guide-fils sur nombre de pièces sciées de plus en plus petit et avantageux. Il est bien entendu que le nombre de cylindres guide-fils ne peut être augmenté indéfiniment à cause des problèmes d'encombrement général. Etant donné que le dispositif est capable de scier plusieurs pièces simultanément, on obtient un gain de productivité considérable. Simultanément on profite des avantages importants liés aux nappes de fils croisés.

Selon un mode d'exécution avantageux, les cylindres guide-fils intérieurs sont arrangés dans un plan et les tables support sont actionnées par un organe de commande commun.

Par ces caractéristiques, on obtient un arrangement particulièrement simple et efficace qui ne nécessite qu'un seul organe de commande.

Selon une variante, chaque table support est susceptible d'être déplacée individuellement vers les nappes de fils croisés ou en s'éloignant de celles-ci par des moyens d'actionnement électriques, pneumatiques, hydrauliques, magnétiques et/ou manuels.

Cette disposition permet le sciage précis de pièces à scier de différentes dimensions.

Dans ces variantes, les centres des axes des cylindres guide-fils peuvent être arrangés selon une disposition non rectiligne.

Ces caractéristiques permettent de réduire l'encombrement général en ce qui concerne la largeur du dispositif entier.

D'autres avantages ressortent des caractéristiques exprimées dans les revendications dépendantes et de la description exposant ci-après l'invention plus en détail à l'aide de dessins qui représentent schématiquement et à titre d'exemple trois modes d'exécution et des variantes.

Les figures 1A et 1B illustrent un premier mode d'exécution par une vue en plan et une vue frontale.

Les figures 2A et 2B montrent des vues en plan et frontale d'une variante.

Les figures 3A et 3B sont des vues en plan et frontale d'un second mode d'exécution.

La figure 3C représente une variante du second mode d'exécution en vue frontale.

La figure 4 est une vue frontale d'un troisième mode d'exécution.

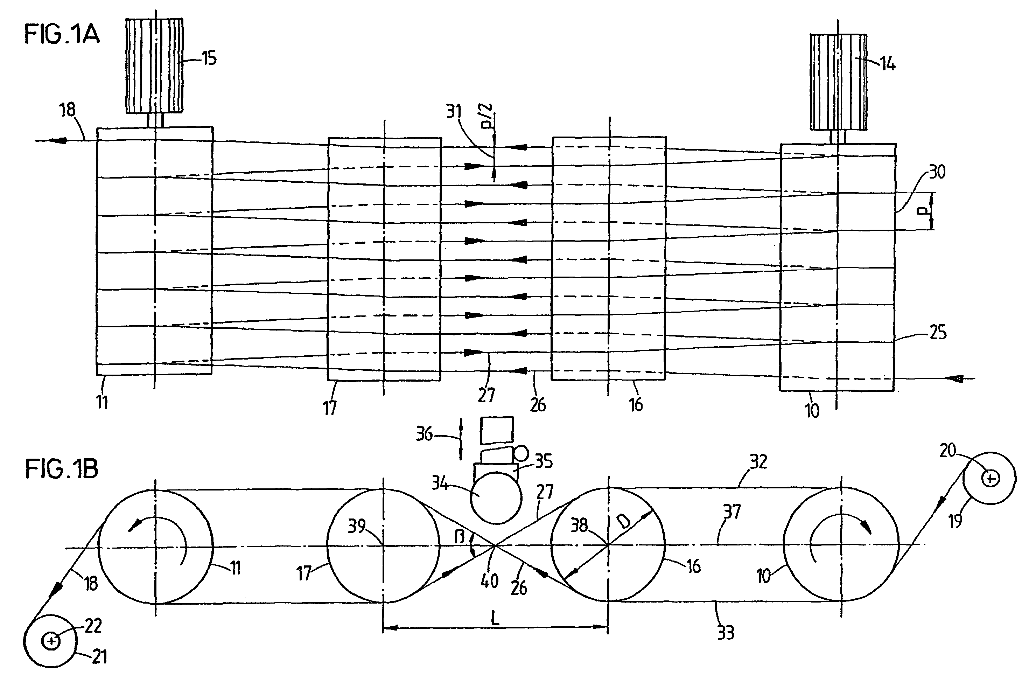

Le premier mode d'exécution représenté aux figures 1A et 1B comprend quatre cylindres guide-fils d'une machine ou d'un dispositif de sciage par fil. Ces cylindres sont arrangés en séquence les uns à la suite des autres et comportent deux cylindres guide-fils extérieurs 10,11 entraînés par des moteurs 14,15 et deux cylindres guide-fils intérieurs 16,17 tournant en roue libre. De manière générale, le fil 18 est déroulé d'une bobine débitrice 19 entraînée par un moteur 20, puis agencé sur les cylindres guide-fils et ensuite rembobiné sur une bobine réceptrice 21 entraînée par un moteur 22. Les cylindres guide-fils supportent le fil 18 et le maintiennent grâce à des gorges 25 prévues sur leur surface. Le fil est susceptible de se déplacer suivant un mouvement alternatif et/ou continu.

L'enroulement du fil sur et autour des quatre cylindres guide-fils est particulier en ce sens que le fil est agencé sur les cylindres guide-fils extérieurs 10,11 suivant un premier intervalle 30 d'une valeur P et sur les cylindres guide-fils intérieurs 16,17 suivant un second intervalle 31 correspondant à la moitié P/2 du premier intervalle.

Le fil 18 passe ainsi d'un premier cylindre guide-fils extérieur 10 sur la partie inférieure d'un premier cylindre guide-fils 16. Ensuite, il passe en ligne directe vers la partie supérieure du second cylindre guide-fils intérieur 17 pour être renvoyé par le second cylindre guide-fils extérieur 11 vers la partie inférieure du second cylindre guide-fils intérieur 17 où il occupe une gorge voisine distante de l'intervalle 31. Il passe ensuite en ligne directe à la partie supérieure du premier cylindre guide-fils intérieur 16 pour être renvoyer par le premier cylindre guide-fils extérieur 10. Il se forme ainsi entre les deux cylindres guide-fils intérieurs 16,17 une structure en X formée de deux nappes de fils 26,27 se croisant avec un angle de croisement β qui est au moins égal à 20° et déterminé par le diamètre D des cylindres guide-fils intérieurs et l'espacement L séparant les axes 38,39 de ces cylindres guide-fils intérieurs.

Les deux nappes de fils 32,33 reliant les cylindres guide-fils extérieurs 10,11 aux cylindres guide-fils intérieurs 16,17 ne sont pas croisés.

La pièce à scier 34 est fixée sur une table support 35 qui peut être déplacée suivant une direction 36 perpendiculaire au plan de travail 37 défini par les deux axes 38,39 des cylindres guide-fils intérieurs 16,17. Cette pièce à scier 34 peut ainsi être mise en appui contre les deux nappes croisées 26,27 perpendiculairement à la droite de croisement 40 des deux nappes.

La figure 1a montre clairement que les projections en plan des fils 18 des deux nappes croisées 26,27 sont parfaitement parallèles entre les deux cylindres guide-fils intérieurs 16,17 et espacées d'un intervalle 31 d'une valeur P/2. On obtient donc des tranches sciées d'une épaisseur P/2 diminuée bien entendu du diamètre du fil 18 enduit d'abrasif. Au contraire, l'intervalle 30 entre les fils sur les guide-fils extérieurs 10,11 est d'une valeur P et les projections en plan des fils ne sont pas parallèles entre les cylindres guide-fils extérieurs et intérieurs.

Du fait de la répartition équilibrée des forces agissant sur les cylindres guide-fils intérieurs 16,17, les roulements de ces derniers peuvent être plus petits et il y a peu de chaleur dégagée. On obtient donc une grande précision des tranches sciées.

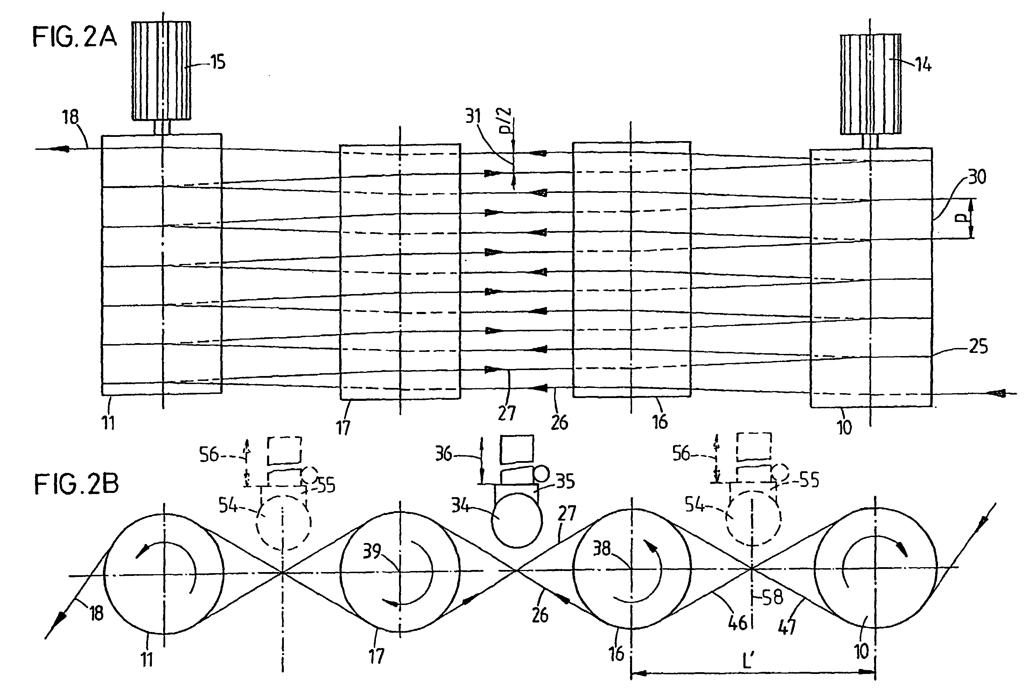

La variante illustrée aux figures 2A et 2B se distingue du mode d'exécution précédent uniquement par le fait que les nappes de fils 32,33 situées entre les cylindres guide-fils extérieurs 10,11 et intérieurs 16,17 ne sont plus parallèles, mais forment également des nappes croisées 46, 47. Il est cependant visible à la figure 2A que les projections en plan des fils ne sont pas parallèles.

Ainsi, il est éventuellement possible de prévoir des tables support mobiles supplémentaires 55 avec des pièces à scier 54. Mais au cas où l'on désire des tranches sciées à faces parallèles, la direction du déplacement 56 ne sera pas perpendiculaire au plan de travail 37, mais incliné d'un angle δ prédéterminé dans'un plan de réglage 58 perpendiculaire au plan de travail 37 et parallèle aux axes 38,39 des cylindres guide-fils. Cet angle pourra être calculé en fonction de l'intervalle 31, du diamètre D des cylindres guide-fils et de la distance L' séparant les axes des cylindres guide-fils intérieurs et extérieurs.

Il est à souligner que la répartition des efforts agissant sur les cylindres guide-fils intérieurs 16,17, est dans cette configuration encore meilleure, ce qui peut contribuer favorablement à la précision des tranches obtenues.

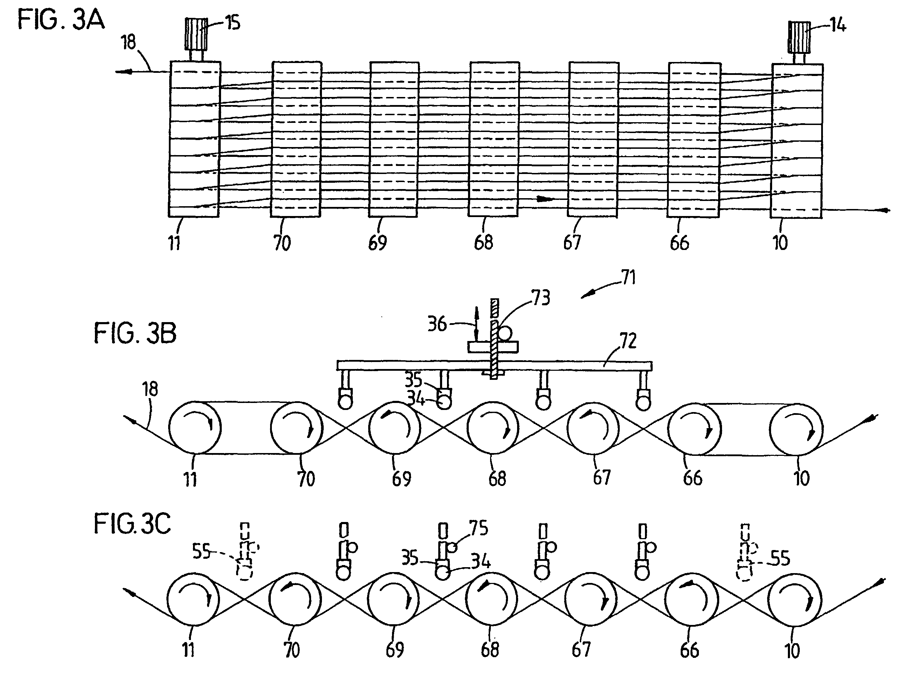

Le mode d'exécution représenté aux figures 3A et 3B diffère du premier mode d'exécution par le fait qu'il comprend n = 5 cylindres guide-fils intérieurs 66 à 70 arrangés en séquence les uns à la suite des autres entre les cylindres guide-fils extérieurs 10,11 entraînés par les moteurs 14,15.

On obtient ainsi (n-1) = 4 croisements de nappes de fils . (n-1) = 4 pièces à scier 34 montées sur des tables supports 35 peuvent ainsi être appliquées contre les nappes de fils croisés sensiblement au voisinage de leur croisement. Il est bien entendu que n pourrait être différent de 5 et choisi avantageusement entre 3 et 6.

Les cylindres guide-fils intérieurs 66 à 70 sont arrangés dans un plan et les tables supports 35 actionnés par un organe de commande commun 71. Ce dernier comprend, par exemple, une barre de liaison 72 reliant des tables supports et un mécanisme à vis et crémaillère et à moteur électrique 73 destiné à déplacer simultanément toutes les tables supports suivant la direction 36 perpendiculaire au plan de travail.

La variante illustrée à la figure 3C diffère du précédent mode d'exécution, par le fait que chaque table support 35 est entraînée par un mécanisme d'entraînement individuel 75. Il est ainsi possible de scier simultanément des pièces 34 de dimensions différentes. En outre, des tables supports supplémentaires 55 pourront être prévues comme cela a été décrit en référence aux figures 2A et 2B.

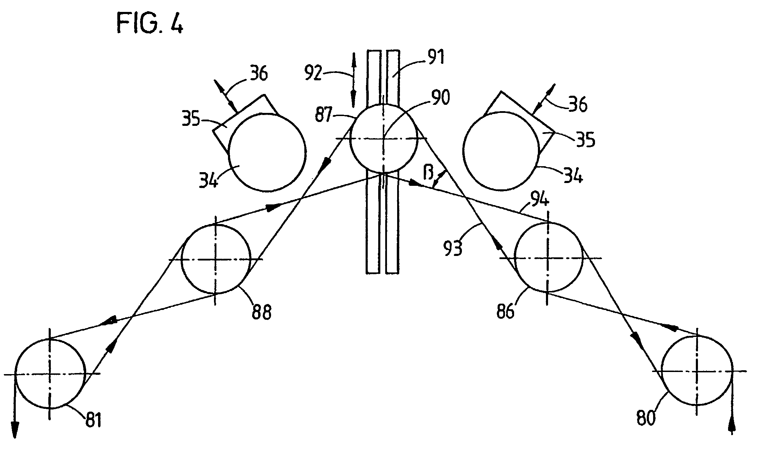

Le mode d'exécution illustré à la figure 4 comporte des cylindres guide-fils qui ne sont pas arrangés dans un plan. Les axes 90 des cylindres pourront présenter toute configuration possible, en arc de cercle, triangulaire, polygonale, etc.

Dans le cas de la figure 4, le dispositif comprend deux cylindres guide-fils extérieurs 80,81 et trois cylindres guide-fils intérieurs 86,87,88 de configuration générale triangulaire. Le cylindre guide-fils 87 du centre forme le sommet du triangle. Il est monté de façon mobile sur un cadre 91. Ainsi, par déplacement de ce cylindre central 87 suivant la direction 92, il est possible de faire varier l'angle de croisement β entre les nappes de fils croisées 93,94. Le déplacement du cylindre central 87 pourra être effectué par tous moyens manuels, électriques, pneumatiques ou hydrauliques. Les autres éléments de ce mode d'exécution restent en tous points similaires à ce qui a été décrit ci-dessus.

Le fil de sciage formant les nappes croisées de fils entre les cylindres guide-fils est constitué d'acier à ressort d'un diamètre compris entre 0,1 et 0,2 mm afin de scier des blocs de matériaux durs ou de composition plus particulière, tels que silicium, céramique, composés des éléments des groupes III-V, GGG (Grenat à Gadolinium-Gallium), saphir, etc., en tranches de 0,1 à 5 mm d'épaisseur environ. L'agent abrasif est un produit du commerce et peut être du diamant, du carbure de silicium, de l'alumine, etc., sous forme fixée au fil ou sous forme libre en barbotine.

Ainsi, conformément à la présente invention comportant un enroulement à espacement différent sur les cylindres guide-fils extérieur et intérieur, il est possible d'obtenir des nappes de fils croisées à grand angle de croisement et fils parallèles en projection, tout en ayant une avance de la ou des tables supports perpendiculaires au plan de travail. Le problème des ondulations des tranches obtenues est ainsi réduit, voire supprimé. Les efforts de cisaillement induits sur la table support et la pression de coupe sur la surface de la pièce à scier sont considérablement réduits. Les efforts sur les cylindres guide-fils intérieurs sont en bonne partie compensés, on pourra donc utiliser des roulements plus petits. La chaleur dégagée par les paliers des cylindres guide-fils intérieurs est également réduite, d'où une précision améliorée des tranches obtenues.

Le concept de nappes de fils à croisement multiple tel qu'exposé en référence aux figures 3A, 3B, 3C et 4 permet en outre d'autres avantages supplémentaires, tels que gain de productivité et usure réduite des cylindres guide-fils pour un nombre donné de pièces à scier.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, d'autres types d'arrangements géométriques des cylindres guide-fils peuvent être envisagés, telles des dispositions en carré, en polygone, circulaire, etc. Le déplacement des tables supports pourra être effectué par tous moyens mécaniques, électriques, pneumatiques, hydrauliques, etc. Au lieu d'entraîner les deux cylindres guide-fils extérieurs, il serait également possible d'entraîner uniquement un des cylindres guide-fils extérieurs. Dans des dispositifs avec un nombre important de cylindres guide-fils intérieurs, on pourrait également prévoir un entraînement d'une partie au moins des cylindres guide-fils intérieurs, les autres tournant en roue libre.

## Revendications

1. Dispositif de sciage par fil comprenant des cylindres guide-fils (10,11,16,17) support un fil (18) maintenu en position grâce à des gorges (25) prévues sur la surface desdits cylindres guide-fils qui définissent l'intervalle entre les fils d'une nappe de fils (26,27), le fil étant susceptible de se déplacer selon un mouvement alternatif ou continu en appui contre au moins une pièce à scier (34) fixée sur une table support (35), **caractérisé par le fait qu'**il comprend au moins quatre cylindres guide-fils arrangés en séquence les uns à la suite des autres avec deux cylindres guide-fils extérieurs (10,11) et au moins deux cylindres guide-fils intérieurs (16,17), le fil étant agencé sur les cylindres guide-fils extérieurs (10,11) suivant un premier intervalle (30) et sur les cylindres guide-fils intérieurs suivant un second intervalle (31) correspondant à la moitié du premier intervalle, le fil provenant d'une première gorge sur un cylindre guide-fils intérieur (16,17) passant dans une gorge du cylindre guide-fils extérieur (10,11) pour être renvoyé dans une seconde gorge sur le cylindre guide-fils intérieur (16,17) distante du second intervalle (31) de la première gorge, le fil coopérant avec les cylindres guide-fils intérieurs (16,17) voisins en passant de la partie supérieure, respectivement inférieure, de l'un des cylindres guide-fils intérieurs en ligne directe à la partie inférieure, respectivement supérieure du cylindre guide-fils intérieur voisin de façon à constituer une structure en X formée de deux nappes de fils (26,27) se croisant avec un angle de croisement (β) au moins égal à 20° et donné par le diamètre (D) des cylindres guide-fils intérieurs (16,17) et par l'espacement (L) séparant les axes (38,39) de deux cylindres guide-fils intérieurs voisins.

2. Dispositif selon la revendication 1, **caractérisé par le fait qu'**il comprend n cylindres guide-fils intérieurs (66 à 70) arrangés en séquence les uns à la suite des autres, n étant un nombre entier égal ou supérieur à 2, le fil coopérant avec les cylindres guide-fils intérieurs de façon à obtenir (n-1) croisements de nappes de fils, (n-1) pièces à scier (34) étant susceptibles d'être appliquées contre les nappes de fils croisées sensiblement au voisinage de leur croisement.

3. Dispositif selon la revendication 2, **caractérisé par le fait que** n est compris entre 3 et 6.

4. Dispositif selon l'une des revendications précédentes, **caractérisé par le fait qu'**au moins un des cylindres guide-fils extérieurs (10,11) est entraîné par un moteur, tandis que les cylindres guide-fils intérieurs (16,17, 66 à 70) tournent en roue libre.

5. Dispositif selon l'une des revendications précédentes, **caractérisé par le fait que** les cylindres guide-fils extérieurs (10,11) sont reliés aux cylindres guide-fils intérieurs (16,17) voisins par deux nappes parallèles (32,33).

6. Dispositif selon l'une des revendications 1 à 4, **caractérisé par le fait que** les cylindres guide-fils extérieurs (10,11) sont reliés aux cylindres guide-fils intérieurs (16,17) voisins par deux nappes croisées (45,46).

7. Dispositif selon la revendication 3, **caractérisé par le fait que** les cylindres guide-fils intérieurs (66 à 70) sont arrangés dans un plan et que les tables support (35) sont actionnées par un organe de commande commun (71).

8. Dispositif selon la revendication 7, **caractérisé par le fait que** ledit organe de commande commun comprend une barre de liaison (72) reliant les tables support (35), des moyens d'actionnement (73) électriques, pneumatiques, hydrauliques, magnétiques et/ou manuels étant susceptibles de déplacer simultanément toutes les tables support (25) suivant une direction (36) perpendiculaire audit plan.

9. Dispositif selon la revendication 3, **caractérisé par le fait que** chaque table support (35) est susceptible d'être déplacée individuellement vers les nappes de fils croisés ou en s'éloignant de celles-ci par des moyens d'actionnement (75) électriques, pneumatiques, hydrauliques, magnétiques et/ou manuels.

10. Dispositif selon l'une des revendications 1 à 3, **caractérisé par le fait que** les axes (90) des cylindres guide-fils (80,81,86,87,88) sont arrangés selon une disposition non plane.

11. Dispositif selon l'une des revendications 1 à 3, **caractérisé par le fait qu'**il comprend des moyens (91) pour modifier ledit angle de croisement (β) agencés pour déplacer au moins un cylindre guide-fils (87).

12. Dispositif selon la revendication 1, **caractérisé par le fait qu'**il comprend des tables support (55) agencées entre les cylindres guide-fils intérieurs (16,17) et extérieurs (10,11) et des moyens de réglage pour régler l'angle d'inclinaison compris entre la direction du déplacement (56) des tables support (55) par rapport aux nappes de fils et à une perpendiculaire (58) à un plan de travail (37) dans lequel sont contenus les axes de deux cylindres guide-fils intérieurs et extérieurs voisins, cet angle d'inclinaison étant déterminé et ajusté de façon à obtenir des tranches à faces parallèles.

## Claims

1. Wire sawing device comprising wire guide cylinders (10, 11, 16, 17) supporting a wire (18) maintained in position by grooves (25) provided on the surface of said wire guide cylinders which define the interval between the wires of a layer of wires (26, 27), the wire being adapted to move with alternating or continuous movement while bearing against a piece (34) to be sawed fixed on a support table (35), **characterized by** the fact that it comprises at least four wire guide cylinders arranged in a sequence following each other with two outer wire guide cylinders (10, 11) and at least two inner wire guide cylinders (16, 17), the wire being arranged on the outer wire guide cylinders (10, 11) at a first interval (30) and on the inner wire guide cylinders at a second interval (31) corresponding to half the first interval, the wire coming from a first groove on an inner wire guide cylinder (16, 17) passing in a groove of the outer wire guide cylinder (10, 11) to be returned to a second groove on the inner wire guide cylinder (16, 17) spaced by the second interval (31) of the first groove, the wire coacting with the adjacent inner wire guide cylinders (16, 17) by passing from the upper portion, respectively the lower portion, of one of the inner wire guide cylinders in a straight line to the lower portion, respectively the upper portion, of the adjacent inner wire guide cylinder so as to constitute an "X" arrangement formed of two layers of wires (26, 27) crossing at a crossing angle (β) at least equal to 20° and determined by the diameter (D) of the inner wire guide cylinders (16, 17) and by the spacing (L) separating the axes (38, 39) of two adjacent inner wire guide cylinders.

2. Device according to claim 1, **characterized by** the fact that it comprises n inner wire guide cylinders (66 to 70) arranged in series one following the other, n being a whole number equal or greater than 2, the wire coacting with the inner wire guide cylinders so as to obtain (n-1) crossings of wire layers, (n-1) pieces to be sawed (34) being adapted to be applied against the layers of crossing wires substantially adjacent their crossing.

3. Device according to claim 2, **characterized by** the fact that n is comprised between 3 and 6.

4. Device according to one of the preceding claims, **characterized by** the fact that at least one of the outer wire guide cylinders (10, 11) is driven by a motor, whilst the inner wire guide cylinders (16, 17, 66 to 70) turn freely.

5. Device according to one of the preceding claims, **characterized by** the fact that the outer wire guide cylinders (10, 11) are connected to the adjacent inner wire guide cylinders (16, 17) by two parallel layers (32, 33).

6. Device according to one of claims 1 to 4, **characterized by** the fact that the outer wire guide cylinders (10, 11) are connected to the adjacent inner wire guide cylinders (16, 17) by two crossing layers (45, 46).

7. Device according to claim 3, **characterized by** the fact that the inner wire guide cylinders (66 to 70) are arranged in a plane and that the support tables (35) are actuated by a common control member (71).

8. Device according to claim 7, **characterized by** the fact that said common control member comprises a connecting bar (72) connecting the support tables (35), electrical, pneumatic, hydraulic, magnetic and/or manual actuating means (73) being adapted to move simultaneously all the support tables (25) in a direction (36) perpendicular to said plane.

9. Device according to claim 3, **characterized by** the fact that each support table (35) is adapted to be moved individually toward the crossed layers of wires or away from them by electrical, pneumatic, hydraulic, magnetic and/or manual actuating means (75).

10. Device according to one of claims 1 to 3, **characterized by** the fact that the axes (90) of the wire guide cylinders (80, 81, 86, 87, 88) are arranged according to a non-planar arrangement.

11. Device according to one of claims 1 to 3, **characterized by** the fact that it comprises means (91) to modify said crossing angle (β) arranged to move at least one wire guide cylinder (87).

12. Device according to claim 1, **characterized by** the fact that it comprises support tables (55) arranged between the inner (16, 17) and outer (10, 11) wire guide cylinders and adjustment means to adjust the angle of inclination between the direction of movement (56) of the support tables (55) relative to the layers of wires and to a perpendicular (58) to a working plane (37) in which are contained the axes of two adjacent inner and outer wire guide cylinders, this angle of inclination being determined and adjusted so as to obtain slices with parallel surfaces.

## Patentansprüche

1. Drahtsägevorrichtung, die drahtführende Zylinder (10,11,16,17) aufweist, welche einen Draht (18) halten, der mittels auf der Oberfläche der besagten drahtführenden Zylinder vorgesehener Rillen (25), die das Intervall zwischen den Drähten einer Schicht von Drähten (26,27) definieren, in Position gehalten wird, wobei der Draht geeignet ist, sich gemäß einer alternierenden oder kontinuierlichen Bewegung aufdrückend auf zumindest ein zu sägendes Stück (34), das auf einem Haltetisch (35) befestigt ist, zu verschieben, **dadurch gekennzeichnet, daß** sie zumindest vier drahtführende Zylinder aufweist, die in Reihe einer nach dem anderen mit zwei äußeren drahtführenden Zylindern (10,11) und zumindest zwei inneren drahtführenden Zylindern (16,17) angeordnet sind, wobei der Draht auf den äußeren drahtführenden Zylindern (10,11) gemäß einem ersten Intervall (30) und auf den inneren drahtführenden Zylindern gemäß einem zweiten, der Hälfte des ersten Intervalls entsprechenden Intervall (31) angeordnet ist, wobei der von einer ersten Rille auf einem inneren drahtführenden Zylinder (16,17) ausgehende Draht in eine Rille des äußeren drahtführenden Zylinders (10,11) übergeht, um in eine zweite Rille auf dem inneren drahtführenden Zylinder (16,17), die von der ersten Rille um das zweite Intervall (31) entfernt ist, zurückgeführt zu werden, wobei der Draht mit den benachbarten inneren drahtführenden Zylindern (16,17) zusammenarbeitet, indem er vom oberen beziehungsweise unteren Teil des einen der inneren drahtführenden Zylinder in direkter Linie auf den unteren beziehungsweise oberen Teil des benachbarten inneren drahtführenden Zylinders derart übergeht, daß er eine X-förmige Struktur bildet, die von zwei Schichten von Drähten (26,27) geformt wird, welche sich mit einem Kreuzungswinkel (β), der zumindest 20° gleicht und durch den Durchmesser (D) der inneren drahtführenden Zylinder (16,17) und durch die, die Achsen (38,39) der zwei benachbarten inneren drahtführenden Zylinder trennende, Entfernung (L) gegeben ist, kreuzen.

2. Vorrichtung gemäß dem Anspruch 1, **dadurch gekennzeichnet, daß** sie n innere drahtführende Zylinder (66 bis 70) enthält, die in Reihe einer nach dem anderen angeordnet sind, wobei n eine ganze Zahl gleich oder größer zwei ist, wobei der Draht mit den inneren drahtführenden Zylindern derart zusammenarbeitet, daß (n-1) Kreuzungen der Schichten von Drähten gebildet werden, wobei (n-1) zu sägende Stücke (34) geeignet sind, merklich in ihrem Kreuzungsbereich gegen die gekreuzten Schichten von Drähten gedrückt zu werden.

3. Vorrichtung gemäß dem Anspruch 2, **dadurch gekennzeichnet, daß** n zwischen 3 und 6 enthalten ist.

4. Vorrichtung gemäß einem der vorhergehenden Ansprüche, **dadurch gekennzeichnet, daß** zumindest einer der äußeren drahtführenden Zylinder (10,11) von einem Motor angetrieben wird, während die inneren drahtführenden Zylinder (16,17, 66 bis 70) in freiem Lauf drehen.

5. Vorrichtung gemäß einem der vorhergehenden Ansprüche, **dadurch gekennzeichnet, daß** die äußeren drahtführenden Zylinder (10,11) mit den benachbarten inneren drahtführenden Zylindern (16,17) über zwei parallele Schichten (32,33) verbunden sind.

6. Vorrichtung gemäß einem der Ansprüche 1 bis 4, **dadurch gekennzeichnet, daß** die äußeren drahtführenden Zylinder (10,11) mit den benachbarten inneren drahtführenden Zylindern (16,17) über zwei gekreuzte Schichten (45,46) verbunden sind.

7. Vorrichtung gemäß dem Anspruch 3, **dadurch gekennzeichnet, daß** die inneren drahtführenden Zylinder (66 bis 70) in einer Ebene angeordnet sind und daß die Haltetische (35) von einem gemeinsamen Antriebsorgan (71) angetrieben werden.

8. Vorrichtung gemäß dem Anspruch 7, **dadurch gekennzeichnet, daß** das besagte Antriebsorgan eine die Haltetische (35) verbindende Verbindungsstange (72), elektrische, pneumatische, hydraulische, magnetische und/oder manuelle Antriebsmittel (73) aufweist, die geeignet sind, alle Haltetische (35) entlang einer zu besagter Ebene senkrechten Richtung (36) zu verschieben.

9. Vorrichtung gemäß dem Anspruch 3, **dadurch gekennzeichnet, daß** jeder Haltetisch (35) geeignet ist, individuell gegen die gekreuzten Schichten von Drähten geschoben zu werden oder von diesen entfernt zu werden, mittels elektrischen, pneumatischen, hydraulischen, magnetischen und/oder manuellen Antriebsmitteln (75).

10. Vorrichtung gemäß einem der Ansprüche 1 bis 3, **dadurch gekennzeichnet, daß** die Achsen (90) der drahtführenden Zylinder (80,81,86,87,88) gemäß einer nicht ebenen Anordnung ausgerichtet sind.

11. Vorrichtung gemäß einem der Ansprüche 1 bis 3, **dadurch gekennzeichnet, daß** sie Mittel (91) zur Änderung des besagten Kreuzungswinkels (β) aufweist, die geeignet sind, zumindest einen drahtführenden Zylinder (87) zu bewegen.

12. Vorrichtung gemäß dem Anspruch 1, **dadurch gekennzeichnet, daß** sie zwischen den inneren (16,17) und äußeren (10,11) drahtführenden Zylindern angeordnete Haltetische (55) und Einstellungsmittel zur Einstellung des Neigungswinkels zwischen der Bewegungsrichtung (56) der Haltetische (55) relativ zu den Schichten von Drähten und zu einer Senkrechten (58) auf eine Arbeitsebene, in welcher die Achsen der zwei benachbarten inneren und äußeren drahtführenden Zylinder liegen, aufweist, wobei dieser Neigungswinkel derart bestimmt und eingestellt wird, daß Scheiben mit parallelen Seiten erhalten werden.
